# EUROPEAN PATENT APPLICATION

(11) **EP 1 717 743 A1**
(43) Date of publication of application: **02.11.2006**
(21) Application number: 06112806.2
(22) Date of filing: 20.04.2006
(51) Int. Cl.: G06Q 10/00, G06F 17/30

(54) **Managing digital documents in a computer system**

(30) Priority: 28.04.2005 EP 05103514
(71) Applicant: Océ-Technologies B.V., 5914 CC Venlo (NL)
(72) Inventor: Bondarenko, Olha, 5625 KM, Eindhoven (NL); Janssen, Timotheus J.W.M., 6641 KR, Beuningen (NL)
(74) Representative: van Meeteren, Arend Anthonie

(57) **Abstract**

A document management system 100 including at least one workstation 110, 120 with an email client 112, 122 provided with at least one dedicated email folder linked to a user account in an email server 136 of the system. The system also includes a file system file system 140 with a storage 146 for storing digital documents.

The document management system 100 is configured to:
link an email folder in the email server to a file folder in the file system;
represent information items, such as documents or references to documents, in the file folder as corresponding email items in the linked email folder; and
synchronize the email server and the file system, so to dynamically reflect changes in information items in the file folder in the corresponding email items in the email folder.

## Description

### Field of the invention

The present invention is situated in the field of document management. In many professional environments, people have to manage documents they work with in the sense of drafting, reading, reviewing, revising, archiving, etc. In many situations, many people manage their documents manually and in physical form, in other words: by putting printed or written paper documents on their desktop or in their drawers. When the number of documents becomes larger and larger, management of them is increasingly more difficult. One way of coping with this problem is digitizing all documents and managing the digital documents in a computer system. The digital documents are then stored in folders in a file system. Additionally an email server is used for storing emails, including attachments, arranged in email folders.

More particularly, the invention relates to a method of managing documents in a computer system that includes at least one workstation, a file system and an email server;
the file system including a storage for storing digital documents;
the email server being configured to store email items for respective user accounts;
the at least one workstation including an email client provided with at least one dedicated email folder linked to a user account in the email server;

Further, the invention relates to a computer system for implementing the method and a computer program product for causing a processor to perform the method.

### Background of the invention

A method and system as described above has been described for so-called Personal Information Managers (PIMs), like Chandler www.osafoundation.org. A PIM's main target is to better integrate typical functions found in email systems, such as calendar, email, contacts, tasks, notes and instant messaging functions. A PIM typically performs the integrated functions by replacing the entire email client by a dedicated program. Documents stored in the file system are typically kept separate. Integration is thus achieved by replacing existing tools, such as the email client and file system, by a dedicated tool making use of PIMs difficult for novice users.

It is also noted that email plug-ins are known that automatically save email attachments as files in the file system, for example as described on www.sperrysoftware.com.

### Summary of the invention

It is an object of the invention to provide an easy-to-operate method and system for handling digital content stored in the file system and the email server.

To meet an object of the invention, a method as described above is characterized in that it includes:
linking an email folder in the email server to a file folder in the file system;
representing information items, such as documents or references to documents, in the file folder as corresponding email items in the linked email folder; and
synchronizing the email server and the file system, so to dynamically reflect changes in information items in the file folder in the corresponding email items in the email folder.

The object of the invention is also met by a document management system that is configured to:
link an email folder in the email server to a file folder in the file system;
represent information items, such as documents or references to documents, in the file folder as corresponding email items in the linked email folder; and
synchronize the email server and the file system, so to dynamically reflect changes in information items in the file folder in the corresponding email items in the email folder.

By representing information items in the file folder as corresponding email items in the linked email folder of the email client, which preferably is a conventional email client, the user is provided with a same view to documents stored in the file system as he has to emails (and their attachments). The information item may, for example, be a document or a reference (link, shortcut) to a document. It also enables the user to collect documents and emails that relate to a same project in one view in the email system. This makes it significantly simpler to find and manage documents and emails. By synchronizing the email server and the file system, changes to the documents in the file folder are automatically reflected in the view on the documents given by the email client. The user may use all conventional tools of the email client to manage the email items, e.g. searching, sorting, etc.

In an embodiment of the invention, the method further includes representing information items in the email folder, such as attachments to email items, as corresponding documents in the linked file folder; and
the step of synchronizing the email server and the file system further including dynamically reflecting changes in information items in the email folder in the email server in the corresponding documents in the linked file folder.

In an embodiment of the invention, the document management system is further configured to:
represent information items in the email folder, such as attachments to email items, as corresponding documents in the linked file folder; and
synchronize the email server and the file system so to dynamically reflect changes in information items in the email folder in the email server in the corresponding documents in the linked file folder.

By representing information items in the email folder as corresponding documents in the linked file folder of the file system, which preferably is a conventional file system, the user is provided with a same view to email attachments as he has to documents stored in the file system. By synchronizing the email server and the file system, changes to the emails are automatically reflected in the documents in the file folder. The user may use all conventional tools of the file system to find and manage documents and email attachments. For example, the user can copy documents (including email attachments) in one operation to another computer or storage system (e.g. portable storage, like a USB key). The user may also use advanced synchronisation tools, such as Microsoft's briefcase, to synchronize the documents (including email attachments) between different computers (e.g. desktop and laptop), providing a user with a simple way to access email attachments already stored in the server also from locations where the user has no access to the server. Additionally, backing up of the email attachments is significantly simplified; conventional backing up of the file system will also result in backing up the email attachments without any need for dedicated plug-ins in the email server for gaining access to the email items.

In an embodiment of the invention, the information item in the file folder is a document and the step of representing a document in the file folder as a corresponding email item in the linked email folder includes creating for the document a corresponding email item in the linked email folder and representing metadata, such as a document name, of the document in the email item. Preferably, the title of the document is represented in the subject field of the email item. The creator of the document may be represented in the sender (from) field of the email. The date of creation of the document may be represented in the received field of the email. This provides the user with a consistent view on metadata for both regular emails as well as documents in the file folder.

In an embodiment of the invention, the step of representing a document in the file folder as a corresponding email item in the linked email folder further includes inserting in the created email item a link, such as a hyperlink, to the document. Through the link the user can directly access the file from the email client by activating the link (e.g. clicking or double-clicking), without having to browse through the file system to locate the document.

In an embodiment of the invention, the information item in the email folder is an email item and the step of representing the information item in the email folder as a corresponding document in the linked file folder includes exporting content of the email item from the email server to the corresponding document in the linked file folder. In this way, the actual content of the email is made available in an easy way as a document (file), without the user having to explicitly export the email. Preferably, the email content is stored in a file format suitable for representing the content and generally supported on computer systems, for example using the HTML format.

In an embodiment of the invention, the information item in the email folder is an attachment to the email item and the step of representing the attachment to the email item in the email folder as a corresponding document in the linked file folder includes exporting the attachment from the email server to the corresponding document in the linked file folder. In this way, the attachment is also automatically made available outside the email system.

In a preferred embodiment, in the email item a link is inserted, such as a hyperlink, to the document that corresponds to the attachment and the email attachment is deleted. In this way the user still has easy access to the email attachment (through the link), while at the same time the storage requirements for the email system are reduced. In this way also the need for storage space to archive emails is reduced, so that the user can longer keep all relevant emails together.

In an embodiment of the invention, the method further includes creating a special email item in the email folder that represents email items in the email folder. In this way, one email item can provide a simultaneous view to all related emails and documents. This special email can be printed and emailed to other users. Preferably, the special email also includes the links to the actually involved documents in the file folder.

In an embodiment of the invention, the step of representing information items in the file folder as corresponding email items in the linked email folder includes enabling a user associated with the user account to select a subset of the information items in the file folder to be represented. This is particularly advantageous if the user is not interested in all files in a folder. The user may select the subset in any suitable way, for instance the system may provide a list of all documents to the user where the user can select the ones in which he is interested.

In an embodiment of the invention, the step of enabling the user to select the subset of information items includes enabling a user to specify metadata for performing an automatic selection of the subset of information items based on the specified metadata. For example, the user may specify a period of creation in which he is interested, a document type (e.g. only Word files), author of the document, etc. The system uses this information to perform an automatic filtering of the files in the folder.

In an embodiment of the invention, the method further includes maintaining information associating information items in the email folder with corresponding information items in the linked file folder. Maintaining such a relationship simplifies the synchronization. In this way it is also simpler to link multiple documents (e.g. attachments of the same email) to one email item. Preferably, the maintained information also includes the metadata specified by the user for filtering.

In an embodiment of the invention, the step of synchronizing the email server and the file system includes: verifying whether actual information items in the email folder and actual information items in the file folder match the maintained information; and in response to determining a discrepancy, performing a corrective action to remove the discrepancy.
In this way the synchronization can be performed effectively.

In an embodiment of the invention, the corrective action includes at least one of the following:
- in response to detecting addition of a document to the file folder: representing the added document as a corresponding email item in the linked email folder and, optionally, adding in the email item a link to the added document;
- in response to detecting removal of a document from the file folder: removing an email item corresponding to the removed document or removing from the corresponding email item a link to the deleted document;
- in response to detecting addition of an email item to the email folder: representing the added email item as a corresponding document in the linked file folder;
- in response to detecting addition of an email item with an email attachment to the email folder: representing the email attachment as a corresponding document in the linked file folder, removing the attachment from the email item and inserting a link to the document corresponding to the attachment in the email item;
- in response to detecting an intended removal of an email item from the email folder: removing a document in the linked file folder that corresponds to the email item to be removed;
- in response to detecting an intended removal from the email folder of an email item with a link to a document in the linked file folder: adding the linked document as an email attachment to the email item and removing the email item.

In this way, the email server and file system are kept synchronized automatically. It will be appreciated that, particularly for removing an item, permission of the user may be requested. If such a permission is denied, the maintained information may be updated to reflect that the discrepancy should not be resolved.

In an embodiment of the invention, the file folder is a folder shared by a plurality of users with respective user accounts. In this way, people can effectively work on a same project by sharing the emails and documents through one uniform interface.

In an embodiment of the invention, the method further includes representing a deadline associated with a document in the file folder as an email field of the corresponding email item in the email folder. This is an easy way of linking deadline information to a document. Conventional file systems do not provide this functionality. Frequently, a user receives a document to be processed by the user as an attachment to an email where the email itself gives the deadline. By inserting the deadline in a field of the email, the view given by the email client on all documents also gives the deadline. This allows the user to simply search or sort on deadlines.

These and other aspects of the invention are apparent from and will be elucidated with reference to the embodiments described hereinafter.

### Brief description of the drawings

In the drawings:
Fig. 1 shows a block diagram of a system according to the invention;
Fig.2 illustrates synchronizing an email folder and file folder;
Fig.3 shows an exemplary user interface for accessing the system according to the invention,
Fig.4 illustrates the synchronization in response to adding or removing a document from the file folder;
Fig.5 illustrates the synchronization in response to adding or removing an email to the email folder; and
Fig.6 illustrates data for maintaining the synchronization.

### Detailed description of a preferred embodiment

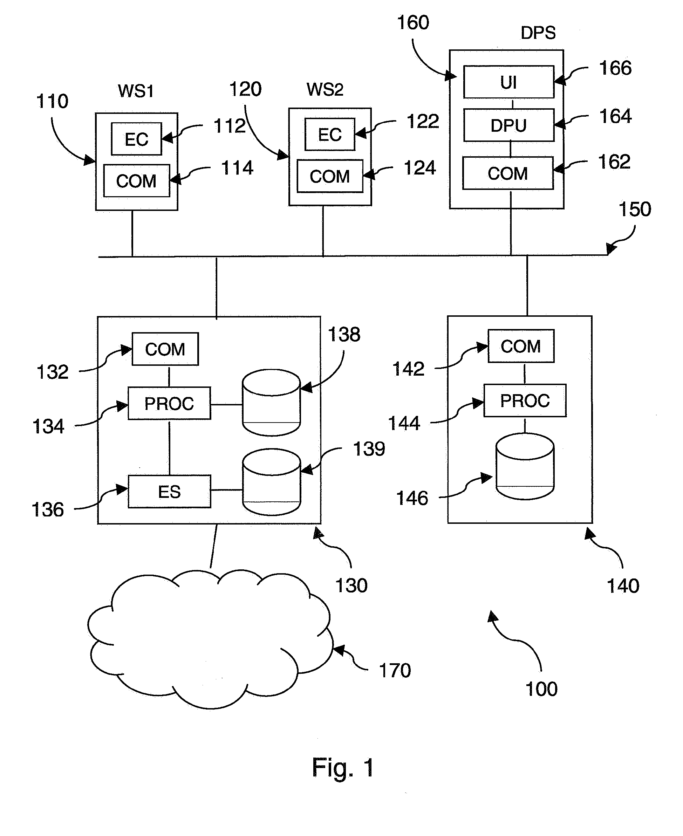

Fig.1 shows a block diagram of an exemplary document management system 100 according to the invention. The system 100 includes at least one workstation (shown are workstations 110 and 120), a file system 140, an email server system 130 and a network 150 for connecting the respective devices with each other. The workstations 110 and 120 may take any suitable form, such as a Personal Computer (PC), laptop, or mobile handheld device (e.g. Personal Digital Assistant (PDA), mobile phone, or digital camera). Typically, such workstation will include a processor for controlling the workstation and for performing user applications, a user output device (e.g. display), a user input device (e.g. keyboard, or mouse), a working memory (e.g. RAM), a storage device (e.g. hard disc, solid state memory like flash; not shown) for storing programs for controlling the processor and for storing digital documents. Those components of the workstations are well known and not shown in the figure. Each of the workstations 110, 120 also includes a respective email client 112, 122. The email client is preferably a conventional email client, like Microsoft's Outlook or Outlook Express, using a suitable conventional email protocol (such as IMAP, Microsoft Exchange or HTTP) for communicating to one or more email servers 130. Each of the email clients 112, 122 is provided with at least one dedicated email folder linked to a user account in the email server. If the workstation supports more than one user, preferably at log-in when the user's identity and authorization to work on the system is verified the email client automatically links to the email folder of the user. This in itself is generally known.

The file system 140 includes a storage 146 for storing digital documents. A processor 144 is used for controlling the operation of the file system. The file system 140 may be implemented using a conventional file server, e.g. based on a Windows or Linux server software. It may use conventional server hardware, e.g. based on Intel microprocessors. If so desired, the role of the file system may be integrated with one of the other device, in particular that of the email server system 130. For example, the documents may be stored in storage 138. It is also possible that each of the workstations has its own file system that may but need not be shared with the other devices in the system 100.

The email server system 130 includes the email server 136. The server 136 is preferably based on a conventional email server, such as Microsoft's Exchange server. The email server 136 will typically be implemented as a software application executing on an operating system such as Windows 2000 server. It may use conventional server hardware, e.g. based on Intel microprocessors that will not be described in full detail here. Shown is the processor 134 that typically executes the email server 136 software. If so desired, the email server 134 may also be incorporated in one of the other devices. The email server is configured to store email items for respective user accounts in a storage such as storage 139. In itself it is well-known how to create user accounts in an email server.

The system is designed to simplify management of files. It synchronizes aspects of the file system 140 and the email server 136. In particular, the system is targeted towards management of human readable files, such as word processing documents, spreadsheets, PDFs, graphics documents, etc. Such electronic files will be referred to as 'documents'. The system in itself can also synchronize non-human readable files, but this is not the prime target of the system. The documents in the file system 140 may have been generated by a user using special application programs such as Word, WP, Powerpoint, importing from a digital camera, etc. In particular, the document may have been created using a document processing device 160. Suitable document processing devices that may be used are, for example, the Océ VarioPrint 20x0 series of digital copiers. Such devices typically have a user interface 166 provided with a display and operating means such as keys, and means 162 for bi-directional communication with at least one of the workstation or a server device. The communication may take place via a dedicated communication means, but preferably takes place through the same network 150 as is used for the communication between the other devices. The document processing system may take several forms or be a combination of those forms. For example, the document processing device 160 may be a digital document print system that includes a document processing unit 164 including a printing unit, such as a laser printer. It may also be a digital document scan system that includes a document processing unit 164 including a scan unit, for example a color scanner. The digital document copy system 160 may also include a document processing unit that includes a copying unit. The copying unit may be composed of a scan unit and a printing unit that preferably can also be used separately. It will be appreciated that each of the document processing devices is controlled by a built-in control unit (not shown), based on a microprocessor, operated under suitable control software. The document processing device may also include storage (not shown) for storing digital documents, such as documents to be printed, documents that have been scanned, or documents that are in the process of being copied. Using a printing unit, the document may be a proofread document (e.g. in PDF format) sent by the printer to the user that issued the printing task. Using a scanning or copying unit, the document may be the document scanned in by the device, e.g. in PDF format or other user-selectable format.

Emails may be generated by users of the system (or even automatically), but may also come from outside the system through an external network 170 such as the Internet. In the exemplary system of Fig.1 the external network is, for emails, accessible via the email server system 130. It will be appreciated that also other physical arrangements may be used, like using a router and/or firewall device to connect the network 150 to the Internet.

The workstations 110, 120, the optional document processing device 160, the file system 140 and the email server system 130 include respective communication means 114, 124, 162, 142, 132 for bi-directional communication through the network 150. The network may use any suitable medium technology, such as a wired network (e.g. Ethernet) or wireless network (e.g. WiFi, Bluetooth, etc.) or mixtures of it. The higher level protocols may be from the TCP/IP suite of protocols as used for Internet. The communication means may be implemented using conventional hardware and/or software.

According to the invention, the document management system 100 is configured to link an email folder in the email server to a file folder in the file system. The email folder is associated with one user account or multiple accounts (i.e. shared by multiple users). This linking is typically performed by a suitable program executed by a processor. Preferably, the processor 134 in the email server system 130 is used. If so desired, part of the functionality may also be established by a processor in another device that communicates with the email server system 130 through a network like network 150. According to the invention, the document management system 100 is also configured to represent information items in the file folder as corresponding email items in the linked email folder and to synchronize the email server and the file system, so to dynamically reflect changes in the information items in the file folder in the corresponding email items in the email folder. The information items may in principle be any information item in the file folder. This could thus covers information items such as documents or references to documents (e.g. shortcuts, hyperlinks, etc.), but may also covers metadata associated with the file folder or the information items in the file folder. Such metadata may include items like a name, date of creation, date of modification, name of a creator, rights of use (e.g. read-only, write-only, etc), etc. Since the system is primarily targeted at human readable information items the system is not intended to deal with specific files/information items like hidden system files or system attributes.

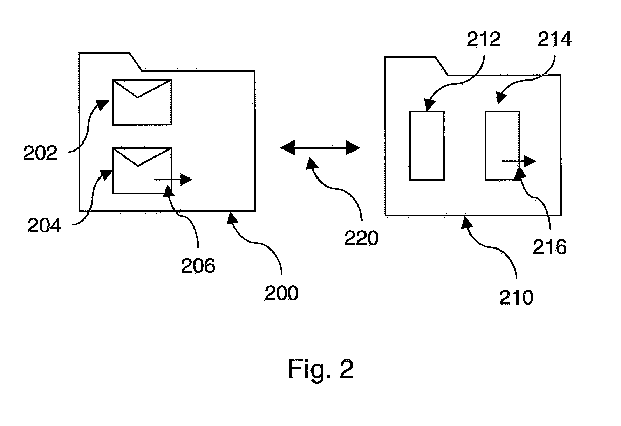

Fig.2 illustrates the linking and synchronizing according to the invention. An email folder 200 in the email server 136 is linked to a file folder 210. The email folder is associated with one or more user accounts. The file folder is also accessible by one or more user accounts. For successful linking it is preferred that the email folder and the linked file folder are accessible by at least one same user account. The email folder 200 typically includes email items, such as an email 202 or an email 204 with one or more attachments (shown is one attachment 206 illustrated in this case by an arrow 206 (details of this will be clarified below). The file folder 210 typically includes document items, such as an actual document 210 or a file 214 (e.g. shortcut) that refers to a document, illustrated by arrow 216 (details of this will be clarified below). Arrow 220 illustrates that the email folder 200 and the file folder 210 are synchronized. Preferably, a 'full' bi-directional synchronization takes place (indicated by the double arrow 220). If so desired also one-directional synchronization would be possible or a full synchronization in one direction and an incomplete synchronization in the other direction.

The synchronization may be established in many ways, for example an IMAP account may be created that will be synchronized with a file folder on a local or network drive. Alternatively, a plug-in to one of the mail clients (such as Microsoft Outlook or Outlook Express) may be created. This latter option provides more functionality since all information and events available to the plug-in can be used for the synchronization.

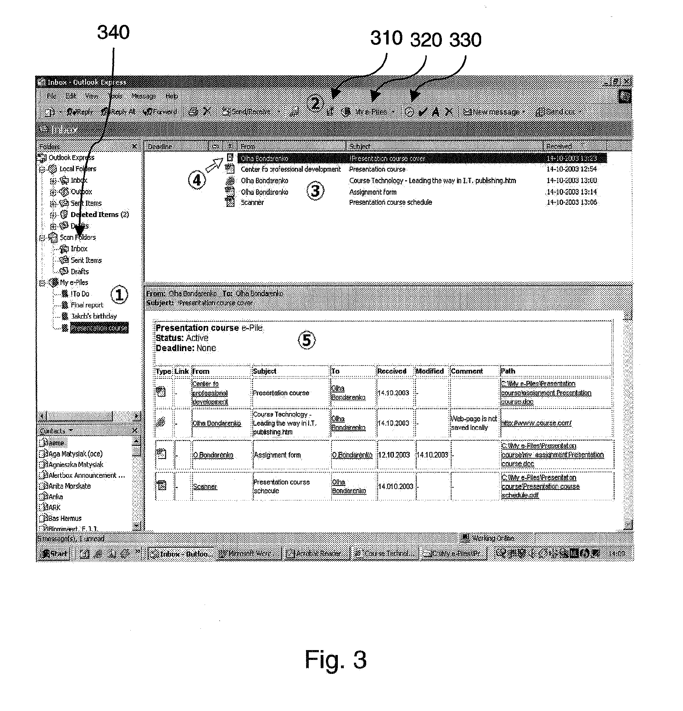

Fig.3 illustrates a plug-in in Outlook Express with an email folder 1, in this description further referred to as "my e-Piles", that is synchronized to a file folder. In this example, the system supports having sub-email folders (shown are four sub-folders) that each may be synchronized to different file folders or to sub-directories of the file folders, if so desired. Fig.3 also shows a tool-bar 2 provided by the plug-in. The tool-bar 2 has a button 310 that enables the user to create an e-Pile in the "my e-Piles" email folder. The user may be given various options such as specifying a name of the e-Pile, specifying a file folder to synchronize with, etc. More details of Fig.3 will be described below.

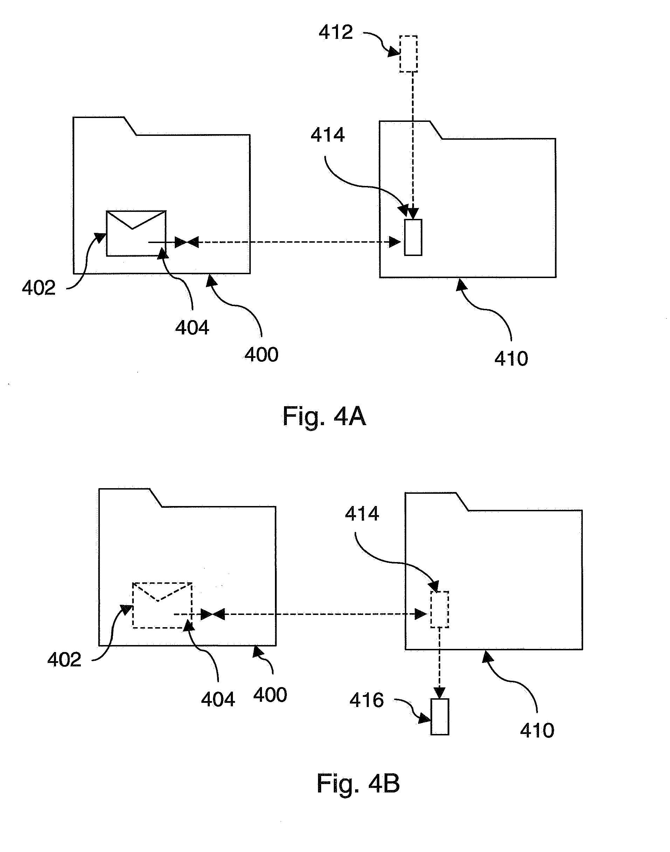

In an embodiment according to the invention the information item in the file folder is a document. For example, as is shown in Fig.4A the user adds a document 412 to the file folder 410, where it then forms document 414. The user may add the document to the folder in any suitable way, e.g. by dragging it there using Windows Explorer, or saving it there in an application program such as Word. According to the invention, the synchronization of the file folder 410 to the linked email folder 400 then ensures that the document 414 in the file folder 410 is represented as a corresponding email item 402 in the linked email folder 400. This operation includes creating for the document 414 the corresponding email item 402 in the linked email folder 400 and representing metadata of the document 414 in the email item. The represented metadata may include any suitable metadata derivable from the file folder 410 or the document 414. Preferably at least the name of the document 414 is represented. For example, the subject field of the email item may be given the name of the document; the received field of the email item may include the date of creating of the document 414; the from field of the email item may include the name of the creator of document 414, etc. The main body field of the email item may include a preview of the document. It is preferred that the main body field only includes a short representation of the document, to enable to user to quickly locate the document in the e-Pile folder. The representation may take any suitable form, such as the first lines or graphical elements of the document, or a thumb-nail representation of a page (e.g. first page) of the document. Particularly where the document is not fully included in the email item, it is preferred that the step of representing a document in the file folder as a corresponding email item in the linked email folder includes inserting in the created email item a link, such as a hyperlink, to the document. This link may, for example, be inserted in the main body field of the email item. This is also illustrated in Fig.4 where the created email item 402 in e-Pile 400 includes a link 404 to the document 414 in the linked file folder. In this way the user can quickly locate the document in the e-Pile folder and access the actual document by clicking (or double-clicking) on the link. This will automatically load an application program, such as a viewer application, associated with the file type of the document 414.

Fig.4B shows a preferred synchronization if the document 414 is removed from the linked file folder 410. The user may remove the document 414 from the folder 410 in any suitable way, e.g. by dragging it from there using Windows Explorer or by issuing a delete command. The removed document is shown as document 416. In response to detecting an actual removement or an intention to remove a document from the file folder, the corresponding email item 402 (and/or the optional link 404 in it) are removed by the system from the email folder 400. This is illustrated by using a dashed email item and link 404. For example, if the email was created in response to the fact that a document was added to the file folder, subsequent removal of the document preferably results in removal of the email item. On the other hand if the document is a 'de-coupled' email attachment, removal of the document from the file folder, preferably only results in removal of the link in the email item to the decoupled attachment. If the email item is removed from the email folder, this removal may be permanent or may involve moving the email item to the well-known 'Deleted Items' email folder, enabling recovery of the email item by the user.

It will be appreciated that the synchronization may be fully automatic, but may also require user assistance, such as asking for a conformation of the operation. In a preferred embodiment, in response to a link being established between an e-Pile and a file folder an initial synchronization is performed. For example, documents in the file folder may be represented in the e-Pile. This can in principle be seen as a repeated operation of what has been described with reference to Fig.4 for adding a document to a file folder. Now all existing documents in the file folder can be regarded as having been added. In a preferred embodiment, the system enables a user associated with the user account to select a subset of the information items in the file folder to be represented. In this way not all documents are represented in the e-Pile. This is particularly useful if the file folder is a shared folder and the user is only interested in certain documents, for example the documents created by a certain author (e.g. him self), recent documents (i.e. later than a predetermined date), etc. The system then performs an automatic filtering and only represents documents that meet the requirements specified by the user. Only those documents will then also be kept fully synchronized. Preferably, the user is enabled to specify metadata (date of creation, (part of) file name, creator, etc.) for performing the automatic selection of the subset of information items based on the specified metadata. The user interface of the system may provide a simple way, such as a well-known pop-up menu, where the user can select the criteria for metadata on a predetermined list of metadata. For example, the user can preferably select the metadata items of interest and criteria for each of those items; the criteria may be such as 'equal to', 'less than', 'includes', etc. Enabling a user to set metadata criteria is in itself well-known (e.g. from searching in Windows Explorer).

Whereas the description so far has put emphasis on synchronizing from the file folder to the e-Pile, preferably linking and synchronization in the other direction is also used. To this end, the system is configured to represent information items in the email folder as corresponding documents in the linked file folder. The information items in the email folder may be any information suitable for being represented in the file folder, in particular email items (i.e. emails) and/or attachments to the email items. It may also represent metadata associated with the email folder, such as the name of the email folder. The system is then also configured to synchronize the email server and the file system by dynamically reflecting changes in information items in the email folder in the email server in the corresponding documents in the linked file folder. The double sided arrow 220 in Fig.2 already also covers the synchronization from the email folder (e-Pile) 200 to the file folder 210.

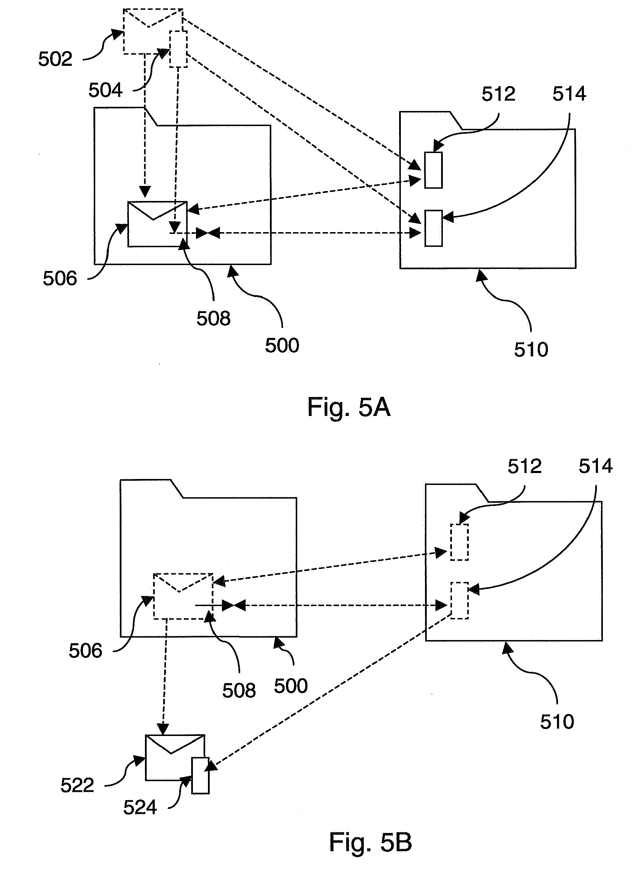

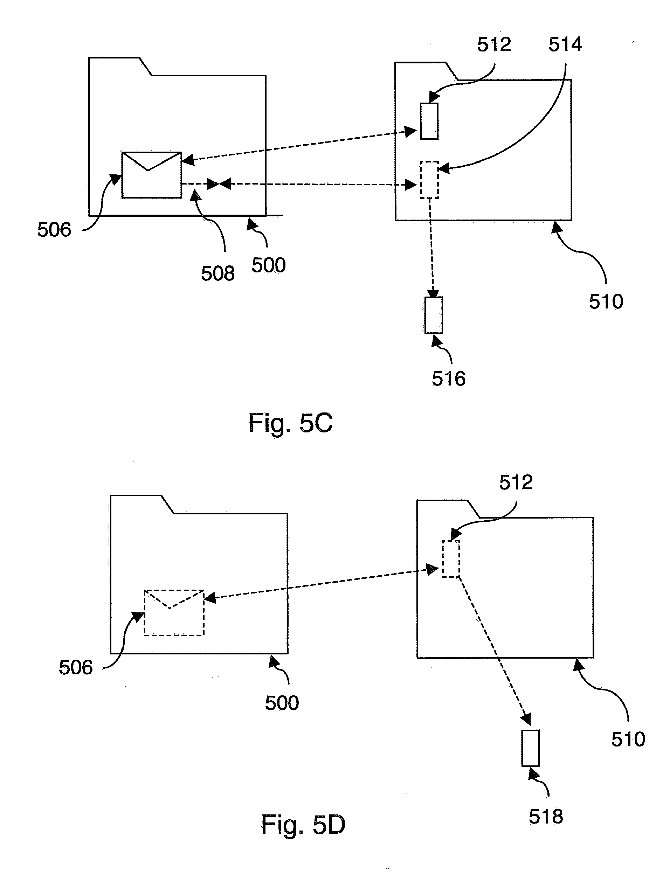

Fig.5 shows various aspects of the synchronization. In Fig.5A, information items (an email 502 with one attachment 504) are added to an e-Pile (email folder) 500 that is linked to file folder 510. The information items may be added to the e-Pile in any suitable form, for example by dragging an email from another email folder into the e-Pile folder. Also a menu button, such as button 320 in Fig.3, may be used to add an item to an e-Pile. It will be appreciated that also plug-ins into application programs, such as Word, may be used to save a document into an e-Pile. An email item (502 becoming 506) that is added to the email folder 500 is represented as a corresponding document 512 in the linked file folder. This operation includes exporting content of the email item 506 from the email server to the corresponding document 512 in the linked file folder 510. In a preferred embodiment, where the information item in the email folder is an attachment 504 to the email item 502, the step of representing the attachment 504 to the email item in the email folder as a corresponding document in the linked file folder includes exporting the attachment 504 from the email server to the corresponding document 514 in the linked file folder 510. In this embodiment, adding an email 502 with one attachment 504 results in creating two respective documents in the file folder 510; a first one 512 corresponding to the email itself and a second one 514 corresponding to the attachment 504. It will be appreciated that in this way each attachment can be represented as a separate document in the file folder 510. Optionally, the attachment may be kept in the email folder as well. However, to reduce storage size for the email folder it is preferred to insert in the email item 506 in the email folder 500 a link 508, such as a hyperlink, to the document that corresponds to the attachment and deleting the email attachment 504 from the email item 506.

Fig.5B shows the synchronization that preferably takes place in response to detecting that an email item 506 (with optional link 508 to a document 514 in the file folder 510) is removed or is being removed from the email folder 500. Removal of the email item 506 from the email folder (indicated by a dashed line for 506 and the email item 522 outside the email folder 500), the system removes the document 512 in the linked file folder 510 that corresponds to the email item 506 to be removed. If the email item 506 includes a link 508 to to a document 514 in the linked file folder 510, this linked document 514 is re-attached as an email attachment 524 of the removed email item 522 and the linked document 514 is removed from the file folder. As before also the document 512 in the linked file folder that corresponds to the email item to be removed is removed from the file folder.

Fig.5C shows the synchronization that preferably takes place in response to detecting that a document 514 is removed (or being removed) from the file folder 510, where an email item 506 includes a link 508 to that document 514. The removed document 514 is shown as document 516 after the removal. It will be appreciated that with removal is meant at least deletion or moving to another file folder. In response to detecting removal of the document 514 from the file folder, the system removes from the corresponding email item 506 the link 508 to the deleted document 514. This is preferable done if the document 514 is a 'de-coupled' email attachment. On the other hand, if the email 506 was created in response to the fact that a document 514 was added to the file folder, subsequent removal of the document 514 preferably results in removal of the email item 506. The removal of the link is indicated with dashes.

Fig.5D shows the preferred synchronization if document 512 is removed (shown as removed document 518) where document 512 corresponds to email item 506. In this case, also the corresponding email item 506 is removed, shown with dashes.

In a preferred embodiment, the system is configured to create a special email item in the email folder that represents email items in the email folder; such a special email item can be seen as a cover email showing the content of the folder. This is illustrated in Fig. 3. In that example, the entire email folder that is being synchronized is called "My e-Piles" and includes four separate sub-solders, e-Piles. The last sub-folder "Presentation course" is selected as can be seen at item 1 in the Fig.3. Item 3 shows that this sub-folder contains four normal email items and one special item indicated as 4. This cover email "Presentation course cover" is opened in Fig.3 in the window 5. There an overview is given of the four regular items in the folder. The overview gives preferably at least one of the following:
- type of document in the file folder represented by the email (e.g. email, Word file, PDF file, etc.)
- whether or not the email item includes one or more links to other documents in the file folder
- the 'from' or 'sender' field of the email item
- the 'subject' field of the email item
- the date on which the corresponding document was created (or the email received), the date of last modification of the corresponding document
- a user-editable comment field
- a 'path' field indicating in which file folder the corresponding document is stored in the file system. Preferably, this path field is a user-selectable link allowing direct access to the linked document.
On top in window 5 some metadata is shown, such as the name of the e-Pile, a status field and a deadline field. Since the special email item is in fact an email, it can be printed in a conventional way giving a user a good overview of the documents on paper.

Applicant's co-pending patent application "Handling digital documents in a network system", filed on this same day, describes how the exchange between a workstation and a document processing apparatus can be managed via email. For example, a document that has been scanned is automatically loaded in a special inbox in a scan email folder indicated using number 340 in Fig.3. Alternatively, the scanned document may be sent as a regular email. Preferably, the scanned document is an attachment to the email. By simply dragging the email to an e-Pile, automatically the scanned document will be saved into the file folder of the file system. No operations like saving an attachment and specifying a file folder are required any more.

The system according to the invention is also highly suitable for so-called interactive printing (IP), also known as "Mailbox printing". The procedure of Mailbox printing is described in applicant's patent EP 1229724 and summarized hereinafter. For interactive printing, a file to be printed is first stored in the memory of the printing device (or a control system for the printing device) and is not to be printed until an operator explicitly so requests at the local user interface of the device by selecting the file and starting a print process for it. When a file for printing is received at a printer or the control system, whatever the case may be, a number of predetermined meta data, such as the name of the owner and the name of the file itself, is extracted from the file and stored in a list maintained in an administration system, whereafter the file itself is stored unchanged in a storage unit in the receiving device in connection with the name of the owner. The storage unit together with the administration system form, as it were, a set of "logic storage spaces", hereinafter called "Mailboxes", for document files, each Mailbox being allocated to one user. When an operator of the printer wants to print a particular document file, he calls up the list of received document files by pressing an appropriate key at the user interface of the printer device. The list of document files is then automatically displayed, sorted by owner name. Applicant's co-pending patent application mentioned above, hereby incorporated by reference, describes how such a mailbox may be represented in a folder in the email system. It will be clear that such 'print emails' can then easily be saved into the file system by simply dragging them from the print email folder to the e-Pile. A document represented in the e-Pile can also be easily printed by copying it into the email print folder.

Preferably, the system also provides a plug-in for web browsers, such as Microsoft Internet Explorer or Firefox. If the user has located an interesting web page, it can use a menu provided by the plug-in to add the page (e.g. a HTML page) to an e-Pile. The e-Pile is preferably user-selectable. The user may be provided with a choice of only creating an email with a link in the email to the web page (e.g. in the form of a URL) or of also fully copying the page itself into the email body. Again, the newly created email will be synchronized automatically to the linked file folder.

In a preferred embodiment, as already shown in window 5 of Fig.3 the system is configured to represent a deadline associated with a document in the file folder as an email field of the corresponding email item in the email folder. In Fig.3 the deadline field is shown for the cover email. It will be appreciated that the same field may also be included in the other email items in the email folder. A menu, such as menu 330, may enable a user to specify a deadline. Preferably, the system is configured to automatically load a user-selected deadline into the deadline field. For example, the user may receive an email where somewhere in the text a deadline is mentioned. The user selects the deadline in the email text, presses button 330, and the system automatically copies the selected text in a deadline field to be confirmed by the user. The menu may also enable the user to select reminders for the deadline (e.g. two days before). The system is then configured to monitor the deadlines and indicate the deadline or reminder to the user (e.g. by highlighting the email item in the main overview window) or by using different colors for the deadline field (e.g. red indicates urgent, green indicates that the deadline is far ahead, yellow indicates a reminder, etc.). Preferably, the user is enabled to sort email items also on the deadline field.

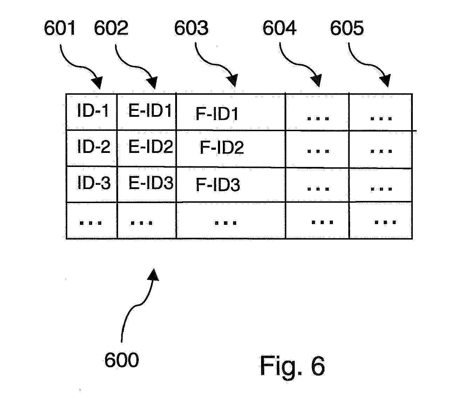

Fig.6 shows a preferred way of maintaining information associating information items in the email folder with corresponding information items in the linked file folder. The maintained information is preferably stored in non-volatile memory, such as a hard disc. In a simple form, the information relating to a linked folder and the corresponding e-Pile is stored in the file folder itself as a hidden file. During use it may be loaded in a volatile memory such as DRAM. The information maintained may take any suitable form. Here, the information will be described from the point of view of the e-Pile. It will be appreciated that a reverse view (from the file folder) is also possible. For each item in the e-Pile a separate entry (row) is maintained in the table 600. Each row includes several fields. For example, a first field 601 may be a general identifier uniquely identifying each item to be synchronized, such as email, attachment, etc. A second field 602 may be an identifier uniquely identifying the item in the e-Pile (e.g. email identifier). A third field 603 may be an identifier uniquely identifying the corresponding document in the linked file folder using any suitable type of identifier, such as a full path name, URI, URL, URN etc. Additional fields 604, 605, etc. may be used for storing additional information relevant for the item, such as metadata, deadline, etc. It will be appreciated that in this way a correspondence between an email item and a document is maintained.

In a preferred embodiment, the system is configured to synchronize the email server and the file system by verifying whether actual information items in the email folder and actual information items in the file folder match the maintained information. The system may perform this test on a regular basis, e.g. every few seconds. For example, it may scan if all email items in an e-Pile are still in the table 600 and if all email items that are in the table are still in the e-Pile. Similarly, it may scan if all documents in the linked file folder are still in the table and if all documents identified in the table are still in the file folder. Preferably, the operating system and/or email server issues a trigger indicating an action, such as a removal or addition, to be performed on behalf of the user. In that way, the synchronization can be more accurate and faster. The system is configured, in response to determining a discrepancy, performing a corrective action to remove the discrepancy.

The corrective action may, for example, be one of the following:
- in response to detecting addition of a document to the file folder: representing the added document as a corresponding email item in the linked email folder and, optionally, adding in the email item a link to the added document;
- in response to detecting removal of a document from the file folder: removing an email item corresponding to the removed document or removing from the corresponding email item a link to the deleted document;
- in response to detecting addition of an email item to the email folder: representing the added email item as a corresponding document in the linked file folder;
- in response to detecting addition of an email item with an email attachment to the email folder: representing the email attachment as a corresponding document in the linked file folder, removing the attachment from the email item and inserting a link to the document corresponding to the attachment in the email item;
- in response to detecting an intended removal of an email item from the email folder: removing a document in the linked file folder that corresponds to the email item to be removed;
- in response to detecting an intended removal from the email folder of an email item with a link to a document in the linked file folder: representing the linked document as an email attachment of the email item, and removing the linked document from the file folder.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. The carrier may be any entity or device capable of carrying the program. For example, the carrier may include a storage medium, such as a ROM, for example a CD ROM or a semiconductor ROM, or a magnetic recording medium, for example a floppy disc or hard disk. Further the carrier may be a transmissible carrier such as an electrical or optical signal that may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method of managing documents in a computer system (100) that includes at least one workstation (110, 120), a file system (140) and an email server (136);
the file system (140) including a storage (146) for storing digital documents;
the email server (136) being configured to store email items for respective user accounts in a storage (139);
the at least one workstation (110, 120) including an email client (112, 122) provided with at least one dedicated email folder linked to a user account in the email server;
**characterized in that** the method includes:
linking an email folder in the email server to a file folder in the file system;
representing information items, such as documents or references to documents, in the file folder as corresponding email items in the linked email folder; and
synchronizing the email server and the file system, so to dynamically reflect changes in information items in the file folder in the corresponding email items in the email folder.

2. The method of claim 1, further including representing information items in the email folder, such as attachments to email items, as corresponding documents in the linked file folder; and
the step of synchronizing the email server and the file system further including dynamically reflecting changes in information items in the email folder in the email server in the corresponding documents in the linked file folder.

3. The method of claim 1, wherein the information item in the file folder is a document and the step of representing a document in the file folder as a corresponding email item in the linked email folder includes creating for the document a corresponding email item in the linked email folder and representing metadata, such as a document name, of the document in the email item.

4. The method of claim 3, wherein the step of representing a document in the file folder as a corresponding email item in the linked email folder further includes inserting in the created email item a link, such as a hyperlink, to the document.

5. The method of claim 2, wherein the information item in the email folder is an email item and the step of representing the information item in the email folder as a corresponding document in the linked file folder includes exporting content of the email item from the email server to the corresponding document in the linked file folder.

6. The method of claim 5, wherein the information item in the email folder is an attachment to the email item and the step of representing the attachment to the email item in the email folder as a corresponding document in the linked file folder includes exporting the attachment from the email server to the corresponding document in the linked file folder.

7. The method of claim 6, further including inserting in the email item a link, such as a hyperlink, to the document that corresponds to the attachment and deleting the email attachment.

8. The method of claim 1, further including creating a special email item in the email folder that represents email items in the email folder.

9. The method of claim 1, wherein the step of representing information items in the file folder as corresponding email items in the linked email folder includes enabling a user associated with the user account to select a subset of the information items in the file folder to be represented.

10. The method as claimed in claim 9, where the step of enabling the user to select the subset of information items includes enabling a user to specify metadata for performing an automatic selection of the subset of information items based on the specified metadata.

11. The method of claim 1, further including maintaining information associating information items in the email folder with corresponding information items in the linked file folder.

12. The method of claim 10, wherein the step of synchronizing the email server and the file system includes:
verifying whether actual information items in the email folder and actual information items in the file folder match the maintained information; and
in response to determining a discrepancy, performing a corrective action to remove the discrepancy.

13. The method as claimed in claim 11, wherein the corrective action includes at least one of the following:
- in response to detecting addition of a document to the file folder: representing the added document as a corresponding email item in the linked email folder and, optionally, adding in the email item a link to the added document;
- in response to detecting removal of a document from the file folder: removing an email item corresponding to the removed document or removing from the corresponding email item a link to the deleted document;
- in response to detecting addition of an email item to the email folder: representing the added email item as a corresponding document in the linked file folder;
- in response to detecting addition of an email item with an email attachment to the email folder: representing the email attachment as a corresponding document in the linked file folder, removing the attachment from the email item and inserting a link to the document corresponding to the attachment in the email item;
- in response to detecting an intended removal of an email item from the email folder: removing a document in the linked file folder that corresponds to the email item to be removed;
- in response to detecting an intended removal from the email folder of an email item with a link to a document in the linked file folder: representing the linked document as an email attachment of the email item and removing the document in the linked file folder.

14. The method of claim 1, wherein the file folder is a folder shared by a plurality of users with respective user accounts.

15. The method of claim 1, further including representing a deadline associated with a document in the file folder as an email field of the corresponding email item in the email folder.

16. A document management system (100) including at least one workstation (110, 120), a file system (140) and an email server (136);
the file system (140) including a storage (146) for storing digital documents;
the email server (136) being configured to store email items for respective user accounts in a storage (139);
the at least one workstation (110, 120) including an email client (112, 122) provided with at least one dedicated email folder linked to a user account in the email server (136);
**characterized in that**
the document management system (100) is configured to:
link an email folder in the email server to a file folder in the file system;
represent information items, such as documents or references to documents, in the file folder as corresponding email items in the linked email folder; and
synchronize the email server and the file system, so to dynamically reflect changes in information items in the file folder in the corresponding email items in the email folder.

17. The document management system of claim 16, wherein the system is further configured to:
represent information items in the email folder, such attachments to email items, as corresponding documents in the linked file folder; and
synchronize the email server and the file system so to dynamically reflect changes in information items in the email folder in the email server in the corresponding documents in the linked file folder.

18. A computer program product for causing a processor to perform the method as claimed in any of the claims 1 to 15.
